# FASCICULE DE BREVET EUROPEEN

(11) **EP 3 948 009 B1**
(45) Date de publication et mention de la délivrance du brevet: **29.03.2023**
(21) Numéro de dépôt: 20709279.2
(22) Date de dépôt: 05.02.2020
(51) Int. Cl.: F16F 1/387, F16F 1/38, B60K 20/00, F16C 11/06, F16C 1/10, F16C 1/26

(54) **DISPOSITIF AMORTISSEUR DE VIBRATIONS**
VIBRATIONSDÄMPFUNGSVORRICHTUNG
VIBRATION DAMPING DEVICE

(30) Priorité: 28.03.2019 FR 1903233
(43) Date de publication de la demande: 09.02.2022
(73) Titulaire: PSA Automobiles SA, 78300 Poissy (FR); Chongqing Regal Automotive Parts Co.,Ltd, JiuLongpo District Chongqing 400052 (CN)
(72) Inventeur: MARTINAT, Yoann, 78310 MAUREPAS (FR); GUIMET, Daniel, 74300 Cluses (FR); BIBOLLET, Alain, 63000 Clermont Ferrand (FR); WEI, Yong, Chongqing, 400052 (CN)
(74) Mandataire: Bourguignon, Eric Pascal Jean
(86) Numéro de dépôt international: PCT/FR2020/050194
(87) Numéro de publication internationale: WO 2020/193880

(56) Documents cités:
- EP-A1- 2 275 696
- EP-A1- 3 385 565
- EP-A2- 1 679 444
- FR-A1- 2 733 285

## Description

La présente invention concerne un dispositif amortisseur de vibrations applicable notamment mais sans que cela soit limitatif dans le cadre du périmètre des commandes de vitesses entre une boîte de vitesses et un levier de vitesse, de préférence pour un véhicule automobile.

Un tel dispositif amortisseur ou de filtration des vibrations permet d'améliorer sensiblement la qualité et/ou la performance des passages de vitesses au levier de vitesse par la limitation des remontées et/ou pics d'effort issus du fonctionnement normal du mécanisme de la boîte de vitesses.

### Art antérieur

Aujourd'hui, lors de la conception des véhicules, il est fait en sorte de créer une liaison mécanique dite liaison rotule entre, d'une part, le câble et le levier de commande de vitesses que manipule le conducteur du véhicule et, d'autre part le câble et la boîte de vitesses, c'est-à-dire un lien mécanique entre la grille mécanique de passage de vitesses de la boîte de vitesses et le levier de vitesse manoeuvré par le conducteur.

Cette liaison mécanique permet d'effectuer les passages de rapports de boîte de vitesses par le conducteur lors de son utilisation. Pour réaliser cette liaison mécanique, il est utilisé divers composants assemblés au niveau du câble.

Sur ces liaisons, peuvent être mises en place des filtrations dites standard pour limiter les remontées vibratoires et acoustiques de la transmission côté compartiment moteur vers l'habitacle du véhicule automobile.

Un certain type de commande de vitesses utilise le concept suivant. Un câble assemblé mécaniquement permet de relier le levier de vitesse à la boîte de vitesses située dans le compartiment moteur.

Le dispositif ou embout de câble, à chaque extrémité, est constitué d'un corps principal qui permet d'accueillir un ensemble composé d'un boîtier en liaison fixe avec un coussinet de forme sphérique raccordé à une rotule du côté du levier de vitesse habitacle.

Le boîtier est également en liaison fixe avec un couvercle permettant ainsi de fermer le dispositif sur le corps principal. Un élément intermédiaire en matériau souple du type élastomère est intercalé entre le boîtier et le corps principal. Une pièce de filtration permet la réalisation d'un découplage servant à traiter les remontées acoustiques et vibratoires venant du moteur et de la boîte de vitesses.

Aujourd'hui, ce type de concept utilisé sur plusieurs véhicules automobiles n'est pas suffisant pour améliorer la prestation de passage de vitesses en se basant sur le critère des remontées et/ou pics d'effort issus du fonctionnement normal du mécanisme de la boîte de vitesses.

Lors d'un passage de rapport de vitesse, il y a un sur-effort à effectuer sur le levier de passage de vitesse lors de la phase de synchronisation de passage de vitesses et un sur-effort lors de la phase de crabotage de passage de vitesse. Ces sur-efforts caractérisent la « rugosité » de la boîte de vitesses.

Il ne faut pas non plus que le système soit trop souple en fin de course pour limiter la course au levier de vitesse. Un tel sur-effort est désagréable pour le conducteur avec de possibles décollements d'épaule du conducteur par rapport à l'assise/siège los d'un passage d'une vitesse impaire.

Le document FR-A1-2 634 839 décrit un dispositif amortisseur de vibrations comprenant un corps présentant une surface d'appui faisant saillie vers un intérieur du dispositif. Le dispositif comprend aussi un boîtier servant d'embout de câble de boîte de vitesses, le boîtier comprenant un organe entourant une rotule d'un levier de commande de changement de vitesses.

Un élément intermédiaire en matériau souple du type élastomère est disposé entre le corps et le boîtier en appui, d'un côté, contre la surface d'appui interne du corps et, de l'autre côté, contre un contour externe du boîtier. L'élément intermédiaire peut présenter des alvéoles de déformation.

Ce document ne décrit cependant pas comme il est possible de limiter une course sous effort permettant de réduire au final le déplacement induit au levier de vitesse. En effet, une surcourse importante est à éviter pour garantir une qualité de prestation de passage de vitesse du fait de cette capacité de filtration plus importante.

Par conséquent, le problème à la base de l'invention est de concevoir un dispositif amortisseur de vibrations se trouvant entre un levier de commande et un ensemble de pilotage d'une fonction, notamment une boîte de vitesses pour un passage de vitesse, afin de piloter la fonction par le levier de commande avec une qualité de prestation optimale tout en limitant au maximum un sur-déplacement non nécessaire d'un élément interne dans le dispositif amortisseur de vibrations dû à une action sur le levier.

Le document EP 3 385 565 A1 est considéré comme l'état de la technique le plus proche de l'objet de la revendication 1.

### Résumé de l'invention

A cet effet, la présente invention concerne un dispositif amortisseur de vibrations comprenant un corps présentant une surface d'appui faisant saillie vers un intérieur du dispositif, un boîtier comprenant un organe destiné à entourer une rotule d'un levier de commande, un élément intermédiaire en matériau souple du type élastomère étant disposé entre le corps et le boîtier en appui, d'un côté, contre la surface d'appui interne du corps et, de l'autre côté, contre un contour externe du boîtier, un couvercle recouvrant le boîtier et l'élément intermédiaire en formant une partie supérieure du dispositif, caractérisé en ce que le boîtier présente un épaulement inférieur faisant saillie vers le corps et supportant l'élément intermédiaire, au moins une nervure supérieure étant disposée sur une face supérieure du corps en vis-à-vis du couvercle et au moins une nervure inférieure étant disposée sur une face inférieure du corps en vis-à-vis de l'épaulement, lesdites au moins une nervure supérieure et une nervure inférieure faisant butée contre un déplacement du couvercle ou du boîtier vers l'extérieur du dispositif.

L'invention consiste donc en un dispositif amortisseur de vibrations permettant à la fois de répondre à la fonction principale de la commande, notamment une commande de changement de vitesses en pouvant passer une vitesse via le levier de vitesse dans la boîte de vitesses avec une qualité de prestation donnée tout en limitant le déplacement du boîtier comprenant un organe entourant la rotule du levier de commande lors d'un effort important exercé sur le levier de commande.

L'objectif de la présente invention est d'obtenir un gain significatif dans le cadre la prestation de pilotage d'une activation de la commande, par exemple un passage de vitesse, et de limiter des remontées de pics d'efforts issus du mécanisme interne du module d'activation, notamment une boîte de vitesses

Il est aussi réalisé une meilleure filtration des remontées vibratoires provenant de la boîte de vitesses et du moteur, ces remontées vibratoires étant transférées, de manière indésirable, via les câbles de commandes de vitesse au levier de commande.

D'une part, il est utilisé un élément intermédiaire en matériau déformable à effet de mémoire et ayant une géométrie spécifique, cet élément possédant un pouvoir de filtration mécanique et acoustique plus important qu'un composant standard.

D'autre part, il est mis en place un dispositif de limitation de course sous effort permettant de limiter au final le déplacement induit par le levier de commande. Une surcourse importante du boîtier à l'intérieur du dispositif dû à un déplacement du levier de commande est à éviter pour garantir la qualité de prestation de pilotage de la commande, par exemple un passage de vitesse, ceci du fait de cette capacité de filtration plus importante.

Il y a donc une synergie importante entre l'action de l'élément intermédiaire en matériau déformable et les nervures supérieures et inférieures. Dans le cas d'un passage de vitesse, le traitement à faible effort des pics d'efforts remontant de la boîte de vitesses par l'élément intermédiaire influence grandement la flexibilité générale de la commande de vitesse du fait de sa souplesse au composant seul et pouvant affecter au final les sensations de l'opérateur du levier ou de la commande automatique du levier, par exemple via des surcourses trop importantes. Ceci a été résolu du fait de la présence de butées physiques matérialisées par les nervures inférieures et supérieures.

Sous effort important, à partir d'une course donnée fonction de la géométrie du corps, du couvercle et du boîtier, ces pièces susnommées peuvent être en contact l'une par rapport à l'autre. Avec des nervures inférieures et supérieures en matériau rigide sur le corps, il est obtenu une butée franche et ainsi une limitation des surcourses du levier de commande transmises au boîtier et au couvercle.

Ceci est d'autant plus important que les ratios bras de levier sur levier de commande sont importants. Ceci permet également de ne pas endommager la partie souple filtrante de l'embout de câble sous effort exceptionnel que la commande doit garantir pour l'opérateur en réponse à des phénomènes exceptionnels.

Avantageusement, le corps porte deux nervures supérieures et deux nervures inférieures deux à deux symétriquement disposées par rapport à un axe médian du dispositif s'étendant entre les faces supérieure et inférieure du dispositif, chaque nervure étant incurvée de forme concave en direction interne du dispositif.

Ceci permet d'avoir des butées supérieures et inférieures dans deux directions transversales au dispositif, par exemple pour le passage de vitesses paires et pour le passage de vitesses impaires.

Avantageusement, l'élément intermédiaire présente une face supérieure comportant deux cavités supérieures symétriquement disposées par rapport à l'axe médian du dispositif et une face inférieure comportant deux cavités inférieures symétriquement disposées par rapport à l'axe médian du dispositif.

Les cavités concourent à l'obtention de la souplesse voulue en se déformant sous effort pour traiter les pics d'effort. Par contre, les nervures vont permettre de limiter la déformation des cavités, ce qui procure une synergie avec effet interactifs entre les nervures et les cavités.

Avantageusement, les cavités supérieures sont superposées aux cavités inférieures, les cavités présentant des profondeurs égales, chaque profondeur étant égale entre 25% à 45% d'une longueur de l'élément intermédiaire prise parallèlement à l'axe médian du dispositif.

Avantageusement, les cavités sont incurvées en étant de forme concave en direction de l'axe médian du dispositif.

Avantageusement, chaque cavité présente deux bossages faisant saillie vers l'intérieur de la cavité.

Avantageusement, les points médians des nervures et des cavités de la face supérieure ou de la face inférieure sont alignés les uns aux autres.

Avantageusement, un câble pénètre dans le dispositif avec son axe longitudinal parallèle à un axe passant par les points médians des cavités et des nervures sur la face supérieure ou la face inférieure, le câble débouchant dans le boîtier.

Avantageusement, l'élément intermédiaire est surmoulé autour du boîtier et présente une face supérieure ou une face inférieure de forme globalement rectangulaire en présentant un évidement central ovalisé entourant le boîtier, l'évidement étant agrandi par deux formes circulaires sur chacun de deux côtés de l'évidement en vis-à-vis de la face supérieure ou inférieure, deux formes circulaires sur un côté étant symétriques aux deux formes circulaires sur un côté opposé et les deux formes circulaires d'un même côté étant symétriques l'une à l'autre par rapport à un axe de symétrie passant entre les deux formes circulaires des deux côtés et un centre de l'évidement, l'axe de symétrie étant perpendiculaire à un axe passant par les points médians des nervures et des cavités sur une même face supérieure ou inférieure.

Les formes circulaires peuvent être incomplètes avec une périphérie non complètement circulaire. Les formes circulaires peuvent être des demi-cercles.

Les formes circulaires d'agrandissement de l'évidement permettent de limiter les surfaces en contact et donc le frottement entre l'élément intermédiaire et le boîtier, afin de pouvoir limiter au maximum l'influence du frottement sur la réponse en élasticité de l'élément intermédiaire.

Du fait de ces caractéristiques, le processus d'assemblage du dispositif amortisseur de vibrations est facilité. De par le surmoulage de l'élément intermédiaire assurant la filtration dans le dispositif, le temps d'assemblage complet du dispositif est réduit, du fait de la diminution du nombre de pièces à assembler et d'un moindre risque d'erreurs de montage, d'où une meilleure performance en qualité en production.

La présente invention concerne un ensemble d'une boîte de vitesses et d'un levier de vitesse raccordés par une interface de liaison comportant un câble, caractérisé en ce que l'ensemble comprend un tel dispositif amortisseur de vibrations.

La présente invention se prête bien à une application pour un ensemble de boîte de vitesses en tant que commande à piloter avec un levier de vitesse en tant que levier de commande. La boîte de vitesses est avantageusement une boîte de vitesses manuelle avec un levier de vitesse actionné par la main d'un conducteur mais la boîte de vitesses peut être aussi une boîte automatique.

### Brève description des figures

D'autres caractéristiques, buts et avantages de la présente invention apparaîtront à la lecture de la description détaillée qui va suivre et au regard des dessins annexés donnés à titre d'exemples non limitatifs et sur lesquels :
[Fig. 1] - la figure 1 est une représentation schématique d'une vue en perspective d'un dispositif amortisseur de vibrations selon un mode de réalisation de la présente invention, les nervures supérieures et le couvercle étant particulièrement bien visibles à cette figure 1,
[Fig. 2] - la figure 2 est une représentation schématique d'une vue de dessus d'un dispositif amortisseur de vibrations selon un mode de réalisation de la présente invention, le couvercle ayant été ôté pour laisser apparaître l'élément intermédiaire avec ses cavités et son évidement médian présentant des formes circulaires l'agrandissant,
[Fig. 3] - la figure 3 est une représentation schématique d'une vue en coupe du corps et de l'élément intermédiaire selon un mode de réalisation de la présente invention, la profondeur des cavités dans l'élément intermédiaire étant visible à cette figure 3,
[Fig. 4] - la figure 4 est une représentation schématique d'une vue en coupe d'un dispositif amortisseur de vibrations selon un mode de réalisation de la présente invention,
[Fig. 5] - la figure 5 est une représentation schématique d'une vue de dessus agrandie d'une portion d'un élément intermédiaire avec sa cavité dans un dispositif amortisseur de vibrations selon un mode de réalisation de la présente invention.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En particulier, les dimensions des différents éléments illustrés ne sont pas représentatives de la réalité.

### Description détaillée de l'invention

Dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées.

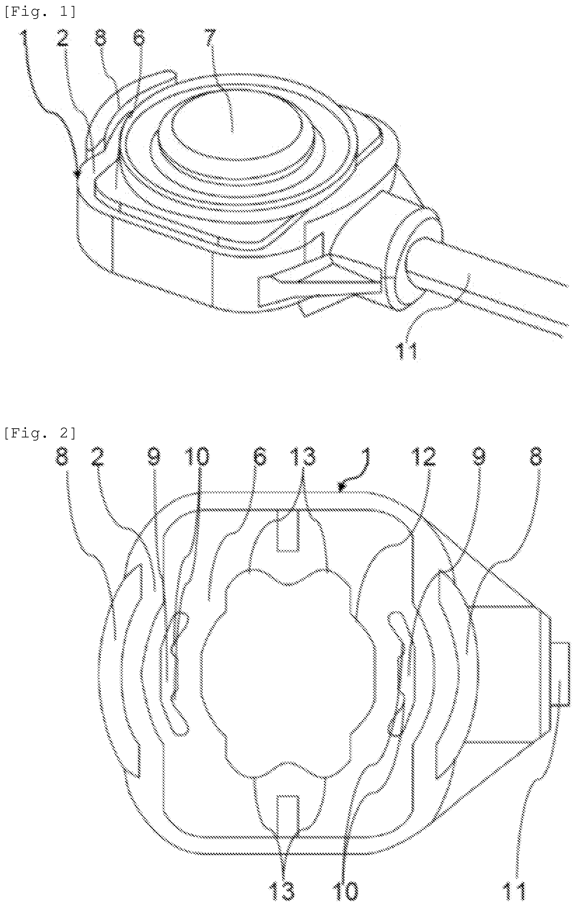

A la figure 1, il est montré une seule nervure 8 supérieure sur le corps 2. Ceci est possible mais n'est pas préféré dans le cadre de la présente invention, un positionnement de deux nervures 8 en vis-à-vis de chaque côté sur la face supérieure et la face inférieure du corps 2 du dispositif 1 amortisseur de vibrations étant préféré.

En se référant à toutes les figures, la présente invention concerne un dispositif 1 amortisseur de vibrations, aussi dénommé embout de câble 11, ceci pour la commande d'une fonction à piloter, le dispositif 1 se trouvant entre un levier de commande et un module d'activation de la fonction qui peut être une boîte de vitesses pour un moteur, notamment dans un véhicule automobile.

Dans ce qui suit il va être pris comme exemple de module d'activation une boîte de vitesses et comme levier de commande un levier de passage de vitesse, avantageusement manuel en étant manoeuvré par la main du conducteur d'un véhicule, notamment un véhicule automobile. Ceci n'est pas limitatif.

Dans cet exemple, côté habitacle du véhicule, le conducteur manipule le levier de commande de vitesse pour réaliser les passages de vitesse qu'un câble 11 transmet à la boîte de vitesses située dans le compartiment moteur.

Tout cela est rendu possible par l'utilisation du câble 11 qui va permettre de connecter le levier de commande de vitesses à une fourche de boîte de vitesses.

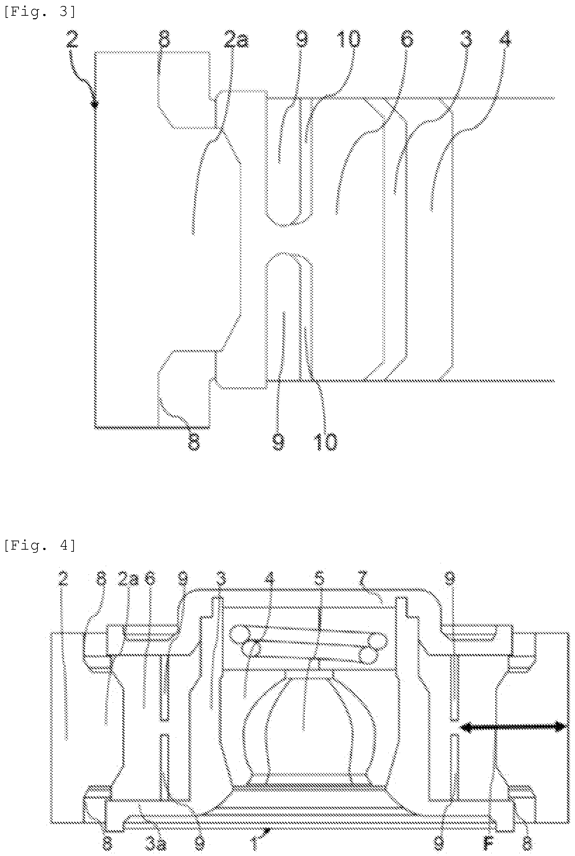

En se référant plus particulièrement à la figure 4, un tel dispositif 1 amortisseur de vibration comprend un corps 2 présentant une surface d'appui 2a faisant saillie vers un intérieur du dispositif 1. Le dispositif 1 loge un boîtier 3, à l'intérieur du corps 2, le boîtier 3 comprenant un organe 4 destiné à entourer une rotule 5 d'un levier de commande.

Un élément intermédiaire 6 en matériau souple du type élastomère est disposé entre le corps 2 et le boîtier 3 en appui, d'un côté, contre la surface d'appui 2a interne du corps 2 et, de l'autre côté, contre un contour externe du boîtier 3.

Un couvercle 7 recouvre le boîtier 3 et l'élément intermédiaire 6 en formant une partie supérieure du dispositif 1, la partie inférieure du dispositif 1 étant la partie du dispositif 1 opposée au couvercle 7. En partie inférieure du dispositif 1, le boîtier 3 présente un épaulement 3a inférieur faisant saillie vers le corps 2 et supportant l'élément intermédiaire 6.

Un tel dispositif 1 présente donc, entre autres, la particularité de recevoir un élément intermédiaire 6, avantageusement surmoulé dans le corps 2. Cet élément intermédiaire 6 est en matière souple type élastomère permettant, via une géométrie particulière, de traiter des pics d'effort non souhaités au levier de commande de vitesse dont l'origine est due au fonctionnement de la mécanique interne de la boîte de vitesses. Ceci garantit pour le conducteur, un confort et une souplesse lors de passages de vitesse et donc un moindre effort lors d'un passage de vitesse.

Cet élément intermédiaire 6 présente un matériau et une configuration géométrique permettant de traiter les pics d'efforts. Cependant il convient que la souplesse conférée à la commande de vitesse ne soit pas trop importante pour éviter des surcourses du boîtier 3 et du couvercle 7 occasionnées par le mouvement du levier de commande. Cette souplesse est relative à la course sous effort F comme indiqué à la figure 4, selon les deux sens de la double flèche F.

Afin d'obtenir un compromis entre traitement des pics d'effort et limitation des surcourses, la présente invention propose qu'au moins une nervure 8 supérieure soit disposée sur une face supérieure du corps 2 en vis-à-vis du couvercle 7 et au moins une nervure 8 inférieure soit disposée sur une face inférieure du corps 2 en vis-à-vis de l'épaulement 3a.

La ou les nervures 8 supérieures et la ou les nervures 8 inférieures font butée contre un déplacement du couvercle 7 ou du boîtier 3 vers l'extérieur du dispositif 1. Ceci est particulièrement bien visible aux figures 1, 2 et 4.

L'élément intermédiaire 6 présente les caractéristiques adéquates pour traiter à faible effort les pics d'efforts remontant du module d'activation de la fonction, avantageusement de la boîte de vitesses. Cependant, ceci influence grandement la flexibilité générale de la commande de vitesses du fait de sa souplesse au composant seul et présente l'inconvénient de pouvoir affecter au final les sensations de l'opérateur, avantageusement le conducteur, lors de la manipulation du levier de commande, avantageusement le levier de vitesse, via des surcourses trop importantes.

Il a donc été recherché une solution pour limiter cette course sous effort. Ceci a été résolu, conformément à la présente invention, par la mise en place de butées physiques matérialisées par les nervures 8. Sous effort important selon la flèche F, à partir d'une course donnée fonction de la géométrie du corps 2, du couvercle 7 et du boîtier 3, ces pièces peuvent être en contact l'une par rapport à l'autre.

Avec la présence de nervures 8 en un matériau rigide, il est obtenu une butée franche et ainsi une limitation des surcourses lors du déplacement du levier de vitesse. Ceci s'applique à tout type de levier de commande

Comme particulièrement bien visible aux figures 1, 2 et 4 pour les nervures 8 supérieures, le corps 2 peut porter deux nervures 8 supérieures et deux nervures 8 inférieures. Les nervures 8 supérieures peuvent être disposées symétriquement par rapport à un axe médian du dispositif 1 s'étendant entre les faces supérieure et inférieure du dispositif.

Il peut en aller de même pour les nervures 8 inférieures. Chaque nervure 8 peut être incurvée de forme concave en direction interne du dispositif 1.

L'élément intermédiaire 6 peut être en matériau à effet de mémoire et ayant une géométrie spécifique, possédant un pouvoir de filtration mécanique/acoustique plus important qu'un composant standard. Il peut être surmoulé directement sur le corps 2 principal de l'embout de câble 11 .

Alternativement, il peut être procédé au surmoulage de l'élément intermédiaire 6 seulement du côté du boîtier 3 et non avec le corps 2.

Alternativement, il peut être procédé au surmoulage de l'élément intermédiaire 6 seulement avec le corps 2 ou avec le couvercle 7.

Alternativement, il peut être procédé à l'interposition de l'élément intermédiaire 6 entre le boîtier 3 et le corps 2 sans aucun surmoulage avec l'une de ces deux pièces ou les deux pièces. L'élément intermédiaire 6 est alors uniquement en contact avec les pièces environnantes et emprisonné dans le dispositif 1.

Il va maintenant être détaillé des caractéristiques optionnelles de la géométrie spécifique de l'élément intermédiaire 6.

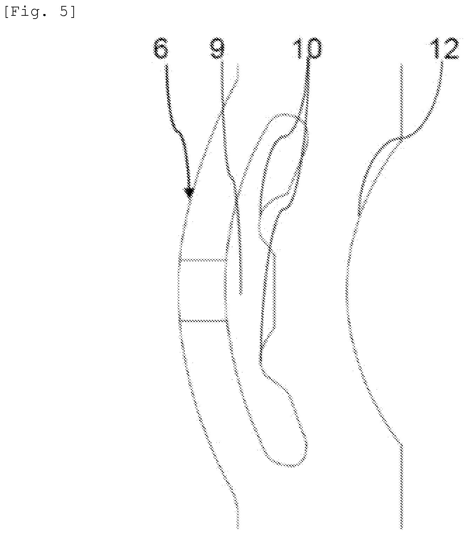

En se référant notamment aux figures 2 à 5 et plus particulièrement aux figures 2 et 5, l'élément intermédiaire 6 peut présenter une face supérieure comportant deux cavités 9 supérieures symétriquement disposées par rapport à l'axe médian du dispositif 1 s'étendant entre les faces supérieure et inférieure du dispositif.

De même, comme visible aux figures 3 et 4, l'élément intermédiaire 6 peut présenter une face inférieure comportant deux cavités 9 inférieures symétriquement disposées par rapport à l'axe médian du dispositif 1 s'étendant entre les faces supérieure et inférieure du dispositif.

Sur chacune des faces supérieure ou inférieure, les cavités 9 permettent d'obtenir une souplesse voulue de l'élément intermédiaire 6 en se déformant sous effort pour traiter les pics d'effort tandis que les nervures 8 vont permettre de limiter la déformation des cavités 9 à partir d'un effort donné fonction du paramétrage que l'on souhaite mettre en oeuvre pour obtenir plus ou moins de souplesse au levier de commande.

Comme visible aux figures 3 et 4, les cavités 9 supérieures peuvent être superposées aux cavités 9 inférieures, les cavités 9 présentant des profondeurs égales. Sans que cela soit limitatif, chaque profondeur peut être égale entre 25% à 45% d'une longueur de l'élément intermédiaire 6 prise parallèlement à l'axe médian du dispositif 1 s'étendant entre les faces supérieure et inférieure du dispositif.

Ceci fait que les cavités 9 occupent presque toute la longueur de l'élément intermédiaire 6 prise parallèlement à l'axe médian du dispositif 1 s'étendant entre les faces supérieure et inférieure du dispositif, ceci sans déboucher l'une dans l'autre en se finissant un peu avant le milieu de la longueur de l'élément intermédiaire 6.

En se référant notamment aux figures 2 et 5, les cavités 9 peuvent être incurvées en étant de forme concave en direction de l'axe médian du dispositif 1 s'étendant entre les faces supérieure et inférieure du dispositif.

Chaque cavité 9 inférieure et supérieure peut présenter deux bossages 10 faisant saillie vers l'intérieur de la cavité, en pouvant s'étendre sur toute la profondeur de la cavité 9 associée. Les deux bossages 10 peuvent être portés par le bord de la cavité 9 le plus interne au dispositif 1 en étant disposés symétriquement par rapport au milieu du bord de la cavité 9 les portant.

Un premier bossage 10 peut être autant éloigné d'un deuxième bossage 10 que d'une extrémité la plus proche du bord de la cavité 9 portant les bossages 10.

Comme il est visible à la figure 2, les points médians des nervures 8 et des cavités 9 de la face supérieure ou de la face inférieure peuvent être alignés les uns aux autres. Les nervures 8 du corps 2 peuvent former un plus grand arc de cercle que les cavités 9 de l'élément intermédiaire 6.

Comme il est visible à la figure 1 prise en combinaison avec la figure 2, un câble 11 peut pénétrer dans le dispositif 1 avec son axe longitudinal parallèle à un axe passant par les points médians des cavités 9 et des nervures 8 sur la face supérieure ou la face inférieure, le câble 11 débouchant dans le boîtier 3 à l'intérieur du dispositif 1.

Comme précédemment mentionné, l'élément intermédiaire 6 déformable peut être surmoulé autour du boîtier 3. En se référant notamment à la figure 2, l'élément intermédiaire 6 peut présenter une face supérieure ou une face inférieure de forme globalement rectangulaire, avantageusement les deux faces supérieure et inférieure.

L'élément intermédiaire 6 peut présenter un évidement 12 central ovalisé entourant le boîtier 3. Selon une caractéristique optionnelle, l'évidement 12 central peut être agrandi par deux formes circulaires 13 au moins partiellement circulaires aux figures sous forme respective d'un demi-cercle.

Ces formes circulaires 13 peuvent être positionnées sur chacun de deux côtés de l'évidement 12 en vis-à-vis, ceci aussi bien sur la face supérieure ou inférieure de l'élément intermédiaire 6 en étant symétriques par rapport au centre de l'évidement 12.

Les formes circulaires 13 en agrandissement de l'évidement 12 de l'élément intermédiaire 6 permettent de limiter les surfaces en contact donc le frottement entre l'élément intermédiaire 6 et le boîtier 3 logé dans l'évidement 12 afin de pouvoir limiter au maximum l'influence du frottement sur la réponse en élasticité de l'élément intermédiaire 6 présentant les caractéristiques précédemment décrites.

Deux formes circulaires 13 d'un même côté peuvent aussi être symétriques par rapport à un axe de symétrie passant entre elles et par le centre de l'évidement 12, l'axe de symétrie étant le même pour les formes circulaires 13 d'un côté et les formes circulaires 13 du côté en vis-à-vis. L'axe de symétrie des formes circulaires 13 s'étend perpendiculairement à l'axe médian des cavités 9 et des nervures 8 sur la face supérieure ou inférieure du dispositif 1.

La présente invention concerne un ensemble d'une boîte de vitesses et d'un levier de vitesse raccordés par une interface de liaison comportant un câble 11, l'ensemble comprenant un dispositif 1 amortisseur de vibrations tel que précédemment décrit.

L'invention n'est nullement limitée aux modes de réalisation décrits et illustrés qui n'ont été donnés qu'à titre d'exemples.

## Revendications

1. Dispositif (1) amortisseur de vibrations comprenant un corps (2) présentant une surface d'appui (2a) faisant saillie vers un intérieur du dispositif (1), un boîtier (3) comprenant un organe (4) destiné à entourer une rotule (5) d'un levier de commande, un élément intermédiaire (6) en matériau souple du type élastomère étant disposé entre le corps (2) et le boîtier (3) en appui, d'un côté, contre la surface d'appui (2a) interne du corps (2) et, de l'autre côté, contre un contour externe du boîtier (3), un couvercle (7) recouvrant le boîtier (3) et l'élément intermédiaire (6) en formant une partie supérieure du dispositif (1), **caractérisé en ce que** le boîtier (3) présente un épaulement (3a) inférieur faisant saillie vers le corps (2) et supportant l'élément intermédiaire (6), au moins une nervure (8) supérieure étant disposée sur une face supérieure du corps (2) en vis-à-vis du couvercle (7) et au moins une nervure (8) inférieure étant disposée sur une face inférieure du corps (2) en vis-à-vis de l'épaulement (3a), lesdites au moins une nervure (8) supérieure et une nervure (8) inférieure faisant butée contre un déplacement du couvercle (7) ou du boîtier (3) vers l'extérieur du dispositif (1).

2. Dispositif (1) selon la revendication précédente, dans lequel le corps (2) porte deux nervures (8) supérieures et deux nervures (8) inférieures deux à deux symétriquement disposées par rapport à un axe médian du dispositif (1) s'étendant entre les faces supérieure et inférieure du dispositif (1), chaque nervure (8) étant incurvée de forme concave en direction interne du dispositif (1).

3. Dispositif (1) selon la revendication précédente, dans lequel l'élément intermédiaire (6) présente une face supérieure comportant deux cavités (9) supérieures symétriquement disposées par rapport à l'axe médian du dispositif (1) s'étendant entre les faces supérieure et inférieure du dispositif et une face inférieure comportant deux cavités (9) inférieures symétriquement disposées par rapport à l'axe médian du dispositif (1) s'étendant entre les faces supérieure et inférieure du dispositif.

4. Dispositif (1) selon la revendication précédente, dans lequel les cavités (9) supérieures sont superposées aux cavités (9) inférieures, les cavités (9) présentant des profondeurs égales, chaque profondeur étant égale entre 25% à 45% d'une longueur de l'élément intermédiaire (6) prise parallèlement à l'axe médian du dispositif (1) s'étendant entre les faces supérieure et inférieure du dispositif.

5. Dispositif (1) selon l'une quelconque des revendications 3 ou 4, dans lequel les cavités (9) sont incurvées en étant de forme concave en direction de l'axe médian du dispositif (1) s'étendant entre les faces supérieure et inférieure du dispositif.

6. Dispositif (1) selon l'une quelconque des revendications 3 à 5, dans lequel chaque cavité (9) présente deux bossages (10) faisant saillie vers l'intérieur de la cavité.

7. Dispositif (1) selon l'une quelconque des revendications 3 à 6, dans lequel les points médians des nervures (8) et des cavités (9) de la face supérieure ou de la face inférieure sont alignés les uns aux autres.

8. Dispositif (1) selon la revendication précédente, dans lequel un câble (11) pénètre dans le dispositif (1) avec son axe longitudinal parallèle à un axe passant par les points médians des cavités (9) et des nervures (8) sur la face supérieure ou la face inférieure, le câble (11) débouchant dans le boîtier (3).

9. Dispositif (1) selon la revendication précédente, dans lequel l'élément intermédiaire (6) est surmoulé autour du boîtier (3) et présente une face supérieure ou une face inférieure de forme globalement rectangulaire en présentant un évidement (12) central ovalisé entourant le boîtier (3), l'évidement (12) étant agrandi par deux formes circulaires (13) sur chacun de deux côtés de l'évidement (12) en vis-à-vis de la face supérieure ou inférieure, deux formes circulaires (13) sur un côté étant symétriques aux deux formes circulaires (13) sur un côté opposé et les deux formes circulaires (13) d'un même côté étant symétriques l'une à l'autre par rapport à un axe de symétrie passant entre les deux formes circulaires (13) des deux côtés et un centre de l'évidement (12), l'axe de symétrie étant perpendiculaire à un axe passant par les points médians des nervures (8) et des cavités (9) sur une même face supérieure ou inférieure.

10. Ensemble d'une boîte de vitesses et d'un levier de vitesse raccordés par une interface de liaison comportant un câble (11), **caractérisé en ce que** l'ensemble comprend un dispositif (1) amortisseur de vibrations selon l'une quelconque des revendications précédentes.

## Patentansprüche

1. Schwingungsdämpfungsvorrichtung (1), umfassend einen Körper (2) mit einer Lagerfläche (2a), die in Richtung eines Inneren der Vorrichtung (1) vorsteht, ein Gehäuse (3), umfassend ein Element (4), das dazu bestimmt ist, ein Kugelgelenk (5) zu umgeben, eines Steuerhebels, wobei zwischen dem Körper (2) und dem Gehäuse (3) ein Zwischenelement (6) aus elastischem Material vom Elastomertyp angeordnet ist, das auf einer Seite an der Lagerfläche (2a) innerhalb des Körpers (2a) anliegt (2) und auf der anderen Seite gegen eine Außenkontur des Gehäuses (3) eine das Gehäuse (3) und das Zwischenelement (6) abdeckende Abdeckung (7), die einen oberen Teil der Vorrichtung (1) bilden, **dadurch gekennzeichnet , dass** das Gehäuse (3) eine untere Schulter (3a) aufweist, die in Richtung des Körpers (2) vorsteht und das Zwischenelement (6) trägt, wobei mindestens eine obere Rippe (8) auf einer oberen Fläche des Körpers (2) angeordnet ist. dem Deckel (7) zugewandt ist und mindestens eine untere Rippe (8) an einer dem Körper (2) zugewandten Unterseite angeordnet ist -in Bezug auf die Schulter (3a) die mindestens eine obere Rippe (8) und eine untere Rippe (8), die gegen eine Bewegung der Abdeckung (7) oder des Gehäuses (3) zur Außenseite der Vorrichtung (1) anstoßen.

2. Vorrichtung (1) nach dem vorhergehenden Anspruch, bei der der Körper (2) zwei obere Rippen (8) und zwei untere Rippen (8) trägt, die paarweise symmetrisch in Bezug auf eine sich dazwischen erstreckende Mittelachse der Vorrichtung (1) angeordnet sind obere und untere Fläche der Vorrichtung (1), wobei jede Rippe (8) in einer konkaven Form in der inneren Richtung der Vorrichtung (1) gekrümmt ist.

3. Vorrichtung (1) nach dem vorhergehenden Anspruch, bei der das Zwischenelement (6) eine obere Fläche aufweist, die zwei obere Hohlräume (9) umfasst, die symmetrisch in Bezug auf die Mittelachse der Vorrichtung (1) angeordnet sind, die sich zwischen den oberen und unteren Flächen erstreckt Fläche der Vorrichtung und eine untere Fläche mit zwei unteren Hohlräumen (9), die symmetrisch in Bezug auf die Mittelachse der Vorrichtung (1) angeordnet sind und sich zwischen der oberen und unteren Fläche der Vorrichtung erstrecken.

4. Vorrichtung (1) nach dem vorhergehenden Anspruch, bei der die oberen Hohlräume (9) die unteren Hohlräume (9) überlagern, wobei die Hohlräume (9) gleiche Tiefen haben, wobei jede Tiefe zwischen 25 % und 45 % einer Länge gleich ist des Zwischenelements (6) parallel zur Mittelachse der Vorrichtung (1), die sich zwischen der Ober- und Unterseite der Vorrichtung erstreckt.

5. Vorrichtung (1) nach einem der Ansprüche 3 oder 4, bei der die Hohlräume (9) gekrümmt sind, während sie eine konkave Form in Richtung der Mittelachse der Vorrichtung (1) aufweisen, die sich zwischen der oberen und der unteren Fläche der Vorrichtung erstreckt.

6. Vorrichtung (1) nach einem der Ansprüche 3 bis 5, bei der jeder Hohlraum (9) zwei Vorsprünge (10) aufweist, die in Richtung des Inneren des Hohlraums vorstehen.

7. Vorrichtung (1) nach einem der Ansprüche 3 bis 6, bei der die Mittelpunkte der Rippen (8) und der Vertiefungen (9) der Oberseite oder der Unterseite miteinander fluchten.

8. Vorrichtung (1) nach dem vorhergehenden Anspruch, bei der ein Kabel (11) in die Vorrichtung (1) mit seiner Längsachse parallel zu einer Achse eintritt, die durch die Mittelpunkte der Hohlräume (9) und der Rippen (8) auf der Stirnseite verläuft Ober- oder Unterseite, das Kabel (11) mündet in das Gehäuse (3).

9. Vorrichtung (1) nach dem vorhergehenden Anspruch, bei der das Zwischenelement (6) um das Gehäuse (3) herum geformt ist und eine obere Fläche oder eine untere Fläche von allgemein rechteckiger Form mit einer ovalisierten zentralen Aussparung (12) aufweist, die das Gehäuse umgibt (3), wobei die Aussparung (12) auf zwei der Ober- bzw. Unterseite zugewandten Seiten der Aussparung (12) jeweils durch zwei Kreisformen (13) vergrößert ist, wobei zwei Kreisformen (13) auf einer Seite zu beiden symmetrisch sind Kreisformen (13) auf einer gegenüberliegenden Seite und die beiden Kreisformen (13) auf der gleichen Seite symmetrisch zueinander in Bezug auf eine Symmetrieachse sind, die zwischen den beiden Kreisformen (13) auf beiden Seiten und einem Mittelpunkt verläuft Aussparung (12), wobei die Symmetrieachse senkrecht zu einer Achse ist, die durch die Mittelpunkte der Rippen (8) und der Hohlräume (9) auf einer gleichen oberen oder unteren Fläche verläuft.

10. Satz aus einem Getriebe und einem Schalthebel, die durch eine ein Kabel (11) umfassende Verbindungsschnittstelle verbunden sind, **dadurch gekennzeichnet, dass** der Satz eine Schwingungsdämpfungsvorrichtung (1) nach einem der vorhergehenden Ansprüche umfasst.

## Claims

1. Vibration damper device (1) comprising a body (2) having a bearing surface (2a) projecting towards an interior of the device (1), a casing (3) comprising a member (4) intended to surround a ball joint (5) of a control lever, an intermediate element (6) made of flexible material of the elastomer type being arranged between the body (2) and the housing (3) resting, on one side, against the bearing surface (2a) inside the body (2) and, on the other side, against an outer contour of the casing (3), a cover (7) covering the casing (3) and the intermediate element (6) forming an upper part of the device (1), **characterized in that** the casing (3) has a lower shoulder (3a) projecting towards the body (2) and supporting the intermediate element (6), at least one upper rib (8) being disposed on an upper face of the body (2) facing the lid (7) and at least one lower rib (8) being arranged on a lower face of the body (2) facing -in relation to the shoulder (3a), said at least one upper rib (8) and one lower rib (8) abutting against movement of the cover (7) or of the casing (3) towards the outside of the device (1).

2. Device (1) according to the preceding claim, in which the body (2) carries two upper ribs (8) and two lower ribs (8) arranged in pairs symmetrically with respect to a median axis of the device (1) extending between the upper and lower faces of the device (1), each rib (8) being curved in a concave shape in the internal direction of the device (1).

3. Device (1) according to the preceding claim, in which the intermediate element (6) has an upper face comprising two upper cavities (9) symmetrically disposed with respect to the median axis of the device (1) extending between the upper faces and lower face of the device and a lower face comprising two lower cavities (9) symmetrically arranged with respect to the central axis of the device (1) extending between the upper and lower faces of the device.

4. Device (1) according to the preceding claim, in which the upper cavities (9) are superimposed on the lower cavities (9), the cavities (9) having equal depths, each depth being equal between 25% and 45% of a length of the intermediate element (6) taken parallel to the central axis of the device (1) extending between the upper and lower faces of the device.

5. Device (1) according to any one of Claims 3 or 4, in which the cavities (9) are curved while being concave in shape towards the median axis of the device (1) extending between the upper and lower faces of the device.

6. Device (1) according to any one of Claims 3 to 5, in which each cavity (9) has two bosses (10) projecting towards the interior of the cavity.

7. Device (1) according to any one of Claims 3 to 6, in which the midpoints of the ribs (8) and the cavities (9) of the upper face or the lower face are aligned with each other.

8. Device (1) according to the preceding claim, in which a cable (11) enters the device (1) with its longitudinal axis parallel to an axis passing through the midpoints of the cavities (9) and the ribs (8) on the face upper or lower face, the cable (11) opening into the housing (3).

9. Device (1) according to the preceding claim, in which the intermediate element (6) is molded around the casing (3) and has an upper face or a lower face of generally rectangular shape with an ovalized central recess (12) surrounding the housing (3), the recess (12) being enlarged by two circular shapes (13) on each of two sides of the recess (12) facing the upper or lower face, two circular shapes (13) on one side being symmetrical to the two circular shapes (13) on an opposite side and the two circular shapes (13) on the same side being symmetrical to each other with respect to an axis of symmetry passing between the two circular shapes (13) on both sides and a center of the recess (12), the axis of symmetry being perpendicular to an axis passing through the midpoints of the ribs (8) and the cavities (9) on a same upper face or lower.

10. Set of a gearbox and a gear lever connected by a connecting interface comprising a cable (11), **characterized in that** the set comprises a vibration damping device (1) according to any one of the claims previous ones.
